# EUROPEAN PATENT APPLICATION

(11) **EP 3 503 071 A1**
(43) Date of publication of application: **26.06.2019**
(21) Application number: 17843384.3
(22) Date of filing: 08.08.2017
(51) Int. Cl.: G08G 1/16, B60R 21/00, B60W 30/09, B60W 30/16, B60W 50/14, F02D 29/02, G08G 1/09

(54) **DRIVING SUPPORT DEVICE, METHOD, MOBILE BODY, AND PROGRAM**

(30) Priority: 22.08.2016 JP 2016162055
(71) Applicant: Sony Corporation, Tokyo 108-0075 (JP)
(72) Inventor: TANAKA, Noriko, Tokyo 108-0075 (JP); SHIMIZU, Itaru, Tokyo 108-0075 (JP); MARUKAWA, Kazuyuki, Tokyo 108-0075 (JP)
(74) Representative: Witte, Weller & Partner Patentanwälte mbB
(86) International application number: PCT/JP2017/028671
(87) International publication number: WO 2018/037899

(57) **Abstract**

The present technology relates to a driving assistant apparatus, a driving assistant method, a moving object, and a program that make it possible to perform appropriate driving assistant. A driving assistant apparatus includes a control unit that perform, on the basis of the number of occupants in a peripheral vehicle, driving assistant processing for avoiding a collision between a host vehicle and the peripheral vehicle. The present technology is applicable to a moving object such as an automobile.

## Description

### Technical Field

The present technology relates to a driving assistant apparatus, a driving assistant method, a moving object, and a program, and particularly to a driving assistant apparatus, a driving assistant method, a moving object, and a program that make it possible to perform appropriate driving assistant.

### Background Art

In the past, a driving assistant function for assisting driving of a vehicle such as a passenger car has been known.

Examples of such driving assistant include performing driving assistant so as to avoid a collision between a host vehicle and another vehicle that travels around the host vehicle. Specifically, for example, a driving assistant technology for controlling the distance between a host vehicle and a forward vehicle corresponding to the number of occupants and the load amount of the host vehicle has been proposed (see, for example, Patent Literature 1).

### Citation List

### Patent Literature

Patent Literature 1: Japanese Patent Application Laid-open No. 2007-62475

### Disclosure of Invention

### Technical Problem

Incidentally, not only the state of a host vehicle but also the state of another vehicle that travels around the host vehicle greatly affects the occurrence of a collision accident or the like. In order to reduce the occurrence rate of such a collision accident or the like, driving assistant that appropriately avoids a collision between a host vehicle and another vehicle is desired.

The present technology has been made in view of the above-mentioned circumstances and it is an object thereof to make it possible to perform appropriate driving assistant.

### Solution to Problem

A driving assistant apparatus according to a first aspect of the present technology includes a control unit that perform, on a basis of the number of occupants in a peripheral vehicle, driving assistant processing for avoiding a collision between a host vehicle and the peripheral vehicle.

The peripheral vehicle may be a vehicle that travels in front of or behind the host vehicle.

The control unit may acquire peripheral vehicle information that is received by communication between the peripheral vehicle and the host vehicle and includes information indicating the number of occupants in the peripheral vehicle, and perform the driving assistant processing on a basis of the peripheral vehicle information.

The peripheral vehicle information may include information indicating a travelling state of the peripheral vehicle.

The control unit may perform, where the number of occupants in the peripheral vehicle in front of the host vehicle is larger than a predetermined number of people, processing of controlling a distance between vehicles as the driving assistant processing to widen a distance to the peripheral vehicle in front of the host vehicle.

The control unit may acquire the peripheral vehicle information of the nearest peripheral vehicle in front of the host vehicle, and further acquire, where the number of occupants in the nearest peripheral vehicle is larger than a predetermined number of people, the peripheral vehicle information of the second nearest peripheral vehicle in front of the host vehicle.

The control unit may perform, on a basis of the peripheral vehicle information of the nearest peripheral vehicle and the peripheral vehicle information of the second nearest peripheral vehicle, processing of controlling sudden braking of the host vehicle as the driving assistant processing.

The control unit may perform, where the number of occupants in the peripheral vehicle behind the host vehicle is larger than a predetermined number of people, processing of controlling a distance between vehicles to widen a distance to the peripheral vehicle behind the host vehicle, or processing of controlling lane change of the host vehicle as the driving assistant processing.

The control unit may acquire, where the number of occupants in the peripheral vehicle behind the host vehicle is larger than a predetermined number of people, the peripheral vehicle information of the peripheral vehicle in front of the host vehicle, and perform the driving assistant processing on a basis of the peripheral vehicle information of the peripheral vehicle in front of the host vehicle.

The control unit may perform, on a basis of the peripheral vehicle information of the peripheral vehicle in front of the host vehicle, processing of controlling sudden braking of the host vehicle or processing of controlling lane change of the host vehicle as the driving assistant processing.

The control unit may compare the number of occupants in the peripheral vehicle with the number of occupants in the host vehicle, and perform the driving assistant processing in accordance with the comparison result.

The control unit may control output of a warning message corresponding to the number of occupants in the peripheral vehicle.

A driving assistant method or a program according to a first aspect of the present technology includes the step of performing, on a basis of the number of occupants in a peripheral vehicle, driving assistant processing for avoiding a collision between a host vehicle and the peripheral vehicle.

In the first aspect of the present technology, on a basis of the number of occupants in a peripheral vehicle, driving assistant processing for avoiding a collision between a host vehicle and the peripheral vehicle is performed.

A moving object according to a second aspect of the present technology includes a control unit that perform, on a basis of the number of occupants in a peripheral vehicle, driving assistant processing for avoiding a collision between a host vehicle and the peripheral vehicle.

In the second aspect of the present technology, on a basis of the number of occupants in a peripheral vehicle, driving assistant processing for avoiding a collision between a host vehicle and the peripheral vehicle is performed.

### Advantageous Effects of Invention

In accordance with the first aspect and the second aspect of the present technology, it is possible to perform appropriate driving assistant.

It should be noted that the effect described here is not necessarily limitative and may be any effect described in the present disclosure.

### Brief Description of Drawings

Fig. 1 is a diagram showing a configuration example of a vehicle.
Fig. 2 is a diagram describing blocks connected to a bus for CAN communication.
Fig. 3 is a diagram describing an around view monitor function.
Fig. 4 is a diagram describing another example of the blocks connected to the bus for CAN communication.
Fig. 5 is a diagram showing a functional configuration example of the vehicle.
Fig. 6 is a diagram describing peripheral vehicle information.
Fig. 7 is a diagram describing driving assistant processing corresponding to the number of occupants in a forward vehicle.
Fig. 8 is a diagram describing driving assistant processing corresponding to the number of occupants in the forward vehicle.
Fig. 9 is a flowchart describing driving control processing.
Fig. 10 is a diagram describing a display example of a warning message.
Fig. 11 is a diagram describing a display example of the warning message.
Fig. 12 is a flowchart describing the driving control processing.
Fig. 13 is a diagram describing a display example of the warning message.
Fig. 14 a diagram describing driving assistant processing corresponding to the number of occupants in a rearward vehicle.
Fig. 15 is a flowchart describing the driving control processing.
Fig. 16 is a flowchart describing the driving control processing.
Fig. 17 is a flowchart describing the driving control processing.
Fig. 18 is a diagram showing a configuration example of a computer.

### Mode(s) for Carrying Out the Invention

Hereinafter, embodiments to which the present technology is applied will be described with reference to the drawings.

### <First Embodiment>

### <Configuration Example of Vehicle>

The present technology makes it possible to realize appropriate driving assistant by performing, on the basis of the number of occupants in a peripheral vehicle that travels around a host vehicle, driving assistant processing for avoiding a collision between the host vehicle and the peripheral vehicle.

Note that the term "driving assistant" as used herein represents travelling control performed during driving of a vehicle at an arbitrary driving mode such as assisted driving and automated driving. In the following, the case where driving assistant processing is appropriately executed while a vehicle to which the present technology is applied performs assisted driving will be described as an example. Further, in the following, the case where the present technology is applied to a passenger car (automobile) will be described as an example. However, the present technology is applicable to moving objects such as motorcycles, bicycles, electric wheelchairs, personal mobility, airplanes, ships, and robots in addition to automobiles such as electric cars and hybrid electric vehicles.

Hereinafter, more specific embodiment will be described.

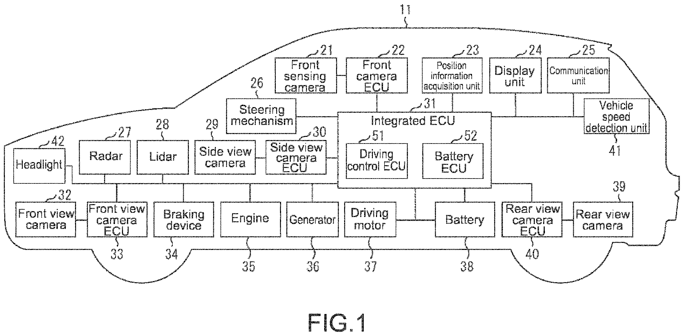

Fig. 1 is a diagram showing a configuration example of an embodiment of a vehicle to which the present technology is applied.

A vehicle 11 shown in Fig. 1 includes a front sensing camera 21, a front camera ECU (Electronic Control Unit) 22, a position information acquisition unit 23, a display unit 24, a communication unit 25, a steering mechanism 26,a radar 27, a lidar 28, a side view camera 29, a side view camera ECU 30, an integrated ECU 31, a front view camera 32, a front view camera ECU 33, a braking device 34, an engine 35, a generator 36, a driving motor 37, a battery 38, a rear view camera 39, a rear view camera ECU 40, a vehicle speed detection unit 41, and a headlight 42.

The units provided in the vehicle 11 are connected to each other by a bus for CAN (Controller Area Network) communication, another connection line, and the like. However, in order to make the figure easy to see, the bus, the connection line, and the like are drawn without particularly distinguishing them.

The front sensing camera 21 includes, for example, a camera dedicated to sensing disposed in the vicinity of a room mirror in the vehicle, images the front of the vehicle 11 as a subject, and outputs the resulting sensing image to the front camera ECU 22.

The front camera ECU 22 appropriately performs processing of improving the image quality or the like on the sensing image supplied from the front sensing camera 21, and then performs image recognition on the sensing image, thereby detecting an arbitrary object such as a white line and a pedestrian from the sensing image. The front camera ECU 22 outputs the result of image recognition to the bus for CAN communication.

The position information acquisition unit 23 includes, for example, a position information measuring system such as a GPS (Global Positioning System), detects the position of the vehicle 11, and outputs the position information indicating the detection result to the bus for CAN communication.

The display unit 24 includes, for example, a liquid crystal display panel, and is disposed at a predetermined position in the vehicle such as the center position of an instrument panel and the inside of a room mirror. Further, the display unit 24 may be a transmissive display superimposed and provided on a windshield part, or a display of a car navigation system. The display unit 24 displays various images under the control of the integrated ECU 31.

The communication unit 25 transmits/receives information to/from a peripheral vehicle, a portable terminal device possessed by a pedestrian, a roadside device, or an external server by various kinds of wireless communication such as inter-vehicle communication, vehicle-to-pedestrian communication, and road-to-vehicle communication. For example, the communication unit 25 performs inter-vehicle communication with a peripheral vehicle, receives, from the peripheral vehicle, peripheral vehicle information including information indicating the number of occupants and the travelling state, and supplies it to the integrated ECU 31.

The steering mechanism 26 performs control of the traveling direction of the vehicle 11, i.e., steering angle control, in accordance with the driver's steering wheel operation or the control signal supplied from the integrated ECU 31. The radar 27 is a distance measuring sensor that measures the distance to an object such as a vehicle and a pedestrian in each direction such as forward and backward by using electromagnetic waves such as millimeter waves, and outputs the result of measuring the distance to the object to the integrated ECU 31 or the like. The lidar 28 is a distance measuring sensor that measures the distance to an object such as a vehicle and a pedestrian in each direction such as forward and backward by using light waves, and outputs the result of measuring the distance to the object to the integrated ECU 31 or the like.

The side view camera 29 is, for example, a camera disposed in a casing of a side mirror or in the vicinity of the side mirror, captures an image of the side (hereinafter, referred to also as the side image) of the vehicle 11 including an area to be a blind spot of the driver, and supplies it to the side view camera ECU 30.

The side view camera ECU 30 performs image processing of improving the image quality such as white balance adjustment on the side image supplied from the side view camera 29, and supplies the obtained side image to the integrated ECU 31 via a cable different from the bus for CAN communication.

The integrated ECU 31 includes a plurality of ECUs such as a driving control ECU 51 and a battery ECU 52 arranged at the center of the vehicle 11, and controls the operation of the entire vehicle 11.

For example, the driving control ECU 51 is an ECU realizing an ADAS (Advanced Driving Assistant System) function or an automated driving (Self driving) function, and controls the driving (travelling) of the vehicle 11 on the basis of various kinds of information such as the image recognition result from the front camera ECU 22, the position information from the position information acquisition unit 23, the peripheral vehicle information supplied from the communication unit 25, the measurement results from the radar 27 and the lidar 28, the result of detecting the vehicle speed from the vehicle speed detection unit 41, and the like. That is, the driving control ECU 51 controls the steering mechanism 26, the braking device 34, the engine 35, the driving motor 37, and the like to control the driving of the vehicle 11. Further, the driving control ECU 51 controls, on the basis of presence or absence of head light of the oncoming vehicle, or the like, which is supplied from the front camera ECU 22 as the image recognition result, the headlight 42 to control beam application by the headlight 42 such as switching between a high beam and a low beam.

Note that in the integrated ECU 31, a dedicated ECU may be provided for each of the functions including the ADAS function, the automated driving function, and the beam control.

Further, the battery ECU 52 controls power supply or the like by the battery 38.

The front view camera 32 includes, for example, a camera disposed in the vicinity of a front grille, captures an image of the front (hereinafter, referred to also as the front image) of the vehicle 11 including an area to be a blind spot of the driver, and supplies it to the front view camera ECU 33.

The front view camera ECU 33 performs image processing of improving the image quality such as white balance adjustment on the front image supplied from the front view camera 32, and supplies the obtained front image to the integrated ECU 31 via a cable different from the bus for CAN communication.

The braking device 34 operates in accordance with the driver's braking operation or the control signal supplied from the integrated ECU 31, and stops or decelerates the vehicle 11. The engine 35 is a power source of the vehicle 11, and is driven in accordance with the control signal supplied from the integrated ECU 31.

The generator 36 is controlled by the integrated ECU 31, and generates power in accordance with driving of the engine 35. The driving motor 37 is a power source of the vehicle 11, receives power supply from the generator 36 or the battery 38, and is driven in accordance with the control signal supplied from the integrated ECU 31. Note that whether to drive the engine 35 or the driving motor 37 during travelling of the vehicle 11 is appropriately switched by the integrated ECU 31.

The battery 38 includes, for example, a battery of 12 V or a battery of 200 V, and supplies power to the respective units of the vehicle 11 in accordance with the control of the battery ECU 52.

The rear view camera 39 includes, for example, a camera disposed in the vicinity of a license plate of a tailgate, captures an image of the rear side (hereinafter, referred to also as the rear image) of the vehicle 11 including an area to be a blind spot of the driver, and supplies it to the rear view camera ECU 40. For example, the rear view camera 39 is activated when a shift lever (not shown) is moved to the position of the reverse (R).

The rear view camera ECU 40 performs image processing of improving the image quality such as white balance adjustment on the rear image supplied from the rear view camera 39, and supplies the obtained rear image to the integrated ECU 31 via a cable different from the bus for CAN communication.

The vehicle speed detection unit 41 is a sensor that detects the vehicle speed of the vehicle 11, and supplies the result of detecting the vehicle speed to the integrated ECU 31. Note that in the vehicle speed detection unit 41, from the result of detecting the vehicle speed, the acceleration, or the differential of the acceleration may be calculated. For example, the calculated acceleration is used for estimating the time until the collision of the vehicle 11 with an object.

The headlight 42 operates in accordance with the control signal supplied rom the integrated ECU 31, and illuminates the front of the vehicle 11 by outputting a beam.

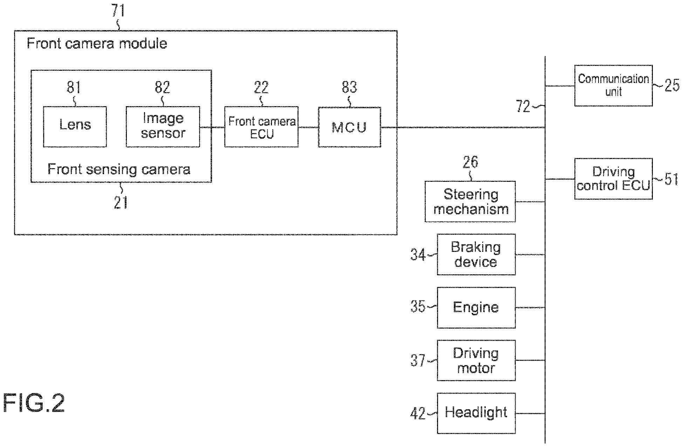

Further, in the vehicle 11, as shown in Fig. 2, a plurality of units including a front camera module 71, the communication unit 25, the driving control ECU 51, the steering mechanism 26, the braking device 34, the engine 35, the driving motor 37, and the headlight 42 are connected to each other via a bus 72 for CAN communication. Note that the components corresponding to those in Fig. 1 are denoted by the same reference symbols in Fig. 2, and description thereof will be appropriately omitted.

In this example, the front camera module 71 includes a lens 81, an image sensor 82, the front camera ECU 22, and an MCU (Module Control Unit) 83.

Further, the lens 81 and the image sensor 82 constitute the front sensing camera 21, and the image sensor 82 includes, for example, a CMOS (Complementary Metal Oxide Semiconductor) image sensor.

In the front camera module 71, light from a subject is collected on the imaging surface of the image sensor 82 by the lens 81. The image sensor 82 captures a sensing image by photoelectrically converting light that has entered from the lens 81, and supplies it to the front camera ECU 22.

The front camera ECU 22 performs, for example, gain adjustment, white balance adjustment, HDR (High Dynamic Range) processing, and the like on the sensing image supplied from the image sensor 82, and then performs image recognition on the sensing image.

In the image recognition, for example, a white line, a curb stone, a pedestrian, a vehicle, a headlight, a brake light, a road sign, a time until a collision with the forward vehicle, and the like are recognized (detected). The recognition results of the image recognition are converted into signals in a format for CAN communication by the MCU 83, and output to the bus 72.

Further, information supplied from the bus 72 is converted into a signal in a format defined for the front camera module 71 by the MCU 83, and supplied to the front camera ECU 22.

The driving control ECU 51 appropriately controls the steering mechanism 26, the braking device 34, the engine 35, the driving motor 37, the headlight 42, and the like on the basis of the result of image recognition output from the MCU 83 to the bus 72 and information supplied from other units such as the radar 27 and the lidar 28. Accordingly, driving control such as change of the travelling direction, braking, acceleration, and starting, warning notification control, beam switching control, and the like are realized.

Further, in the case where the driving control ECU 51 realizes the automated driving function or the like, for example, the locus of the position of the target object may be further recognized by the driving control ECU 51 from the image recognition result at each time obtained by the front camera ECU 22, and such a recognition result may be transmitted to an external server via the communication unit 25. In such a case, for example, in the server, learning such as a deep neural network is performed, and a necessary dictionary or the like is generated and transmitted to the vehicle 11. In the vehicle 11, the dictionary or the like obtained in this way is received by the communication unit 25, and the received dictionary or the like is used for various predictions and the like in the driving control ECU 51.

Note that of the controls performed by the driving control ECU 51, control that can be realized from only the result of image recognition on the sensing image may be performed not by the driving control ECU 51 but by the front camera ECU 22.

Specifically, for example, the front camera ECU 22 may control the headlight 42 on the basis of the presence or absence of headlight of the oncoming vehicle, which is obtained by the image recognition on the sensing image. In this case, for example, the front camera ECU 22 generates a control signal that instructs switching between a low beam and a high beam, or the like, and supplies the control signal to the headlight 42 via the MCU 83 and the bus 72, thereby controlling the beam switching by the headlight 42.

Alternatively, for example, the front camera ECU 22 may generate a warning notice of a collision against an object and a warning notice of departure from the travelling lane (lane) on the basis of the result of recognizing a white line, a curb stone, a pedestrian, and the like, which is obtained by the image recognition on the sensing image, and output it to the bus 72 via the MCU 83, thereby controlling the warning notice. In this case, the warning notice output from the front camera ECU 22 is supplied to, for example, the display unit 24 or a speaker (not shown). Accordingly, it is possible to display a warning on the display unit 24 or output a warning message through the speaker.

Further, in the vehicle 11, by displaying a composite image on the display unit 24 at the time of parking, for example, the around view monitor function is realized.

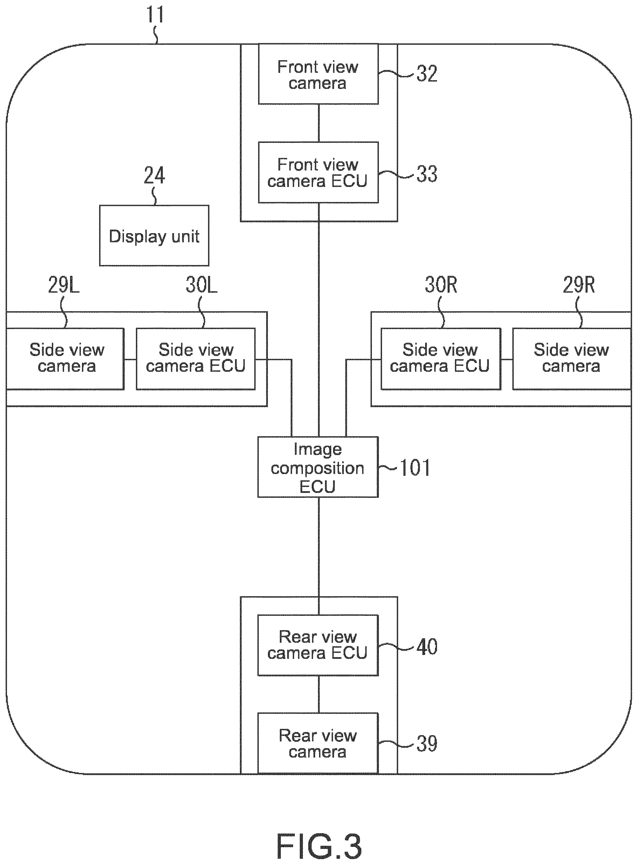

That is, as shown in Fig. 3, the front image, the rear image, and the side image obtained by the respective units are supplied, via a cable different from the bus for CAN communication, to an image composition ECU 101 provided in the integrated ECU 31, and a composite image is generated from the images. Note that the components corresponding to those in Fig. 1 are denoted by the same reference symbols in Fig. 3, and description thereof will be appropriately omitted.

In Fig. 3, as the side view camera 29 shown in Fig. 1, a side view camera 29L disposed on the left side of the vehicle 11 and a side view camera 29R disposed on the right side of the vehicle 11 are provided. Further, as the side view camera ECU 30, a side view camera ECU 30L disposed on the left side of the vehicle 11 and a side view camera ECU 30R disposed on the right side of the vehicle 11 are provided.

To the image composition ECU 101,the front image obtained by the front view camera 32 is supplied from the front view camera ECU 33 and the rear image obtained by the rear view camera 39 is supplied from the rear view camera ECU 40. Further, to the image composition ECU 101, the side image obtained by the side view camera 29L (hereinafter, particularly referred to also as the left side image) is supplied from the side view camera ECU 30L and the side image obtained by the side view camera 29R (hereinafter, particularly referred to also as the right side image) is supplied from the side view camera ECU 30R.

The image composition ECU 101 generates, on the basis of the supplied images, a composite image in which the front image, the rear image, the left side image, and the right side image are arranged in corresponding areas, and supplies the obtained composite image to the display unit 24 for display. The driver is capable of safely and easily parking the vehicle 11 by driving the vehicle 11 while watching the composite image displayed in this way. Note that the integrated ECU 31 may control the driving of the vehicle 11 on the basis of the composite image, and park the vehicle 11.

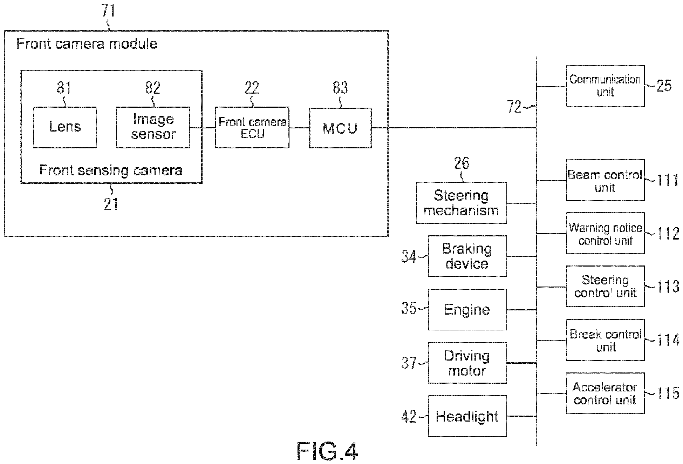

Further, the driving control ECU 51 does not necessarily need to control the plurality of different functions. For example, as shown in Fig. 4, a control unit may be provided for control content, i.e., each function. Note that the components corresponding to those in Fig. 2 are denoted by the same reference symbols in Fig. 4, and description thereof will be appropriately omitted.

In the example shown in Fig. 4, to the bus 72 for CAN communication, a plurality of units including the front camera module 71, the communication unit 25, the steering mechanism 26, the braking device 34, the engine 35, the driving motor 37, the headlight 42, a beam control unit 111, a warning notice control unit 112, a steering control unit 113, a break control unit 114, and an accelerator control unit 115 are connected.

In this example, the control performed by the driving control ECU 51 in the example shown in Fig. 2 is shared and performed by the beam control unit 111, the warning notice control unit 112, the steering control unit 113, the break control unit 114, and the accelerator control unit 115.

Specifically, for example, the beam control unit 111 performs control of switching a low beam and a high beam by controlling the headlight 42 on the basis of the result of image recognition, which is obtained by the front camera ECU 22. Further, the warning notice control unit 112 controls the warning notice such as displaying of various warnings on the display unit 24 and outputting a warning message by the speaker (not shown), on the basis of the result of image recognition, which is obtained by the front camera ECU 22.

The steering control unit 113 controls the travelling direction of the vehicle 11 by controlling the steering mechanism 26 on the basis of the result of image recognition, which is obtained by the front camera ECU 22, the measurement results from the radar 27 and the lidar 28, and the like. The break control unit 114 controls the stop and deceleration of the vehicle 11 by controlling the braking device 34 on the basis of the result of image recognition, which is obtained by the front camera ECU 22, the measurement results from the radar 27 and the lidar 28, and the like.

Further, the accelerator control unit 115 controls starting and acceleration of the vehicle 11 by controlling the engine 35 and the driving motor 37 on the basis of the result of image recognition, which is obtained by the front camera ECU 22, the measurement results from the radar 27 and the lidar 28, and the like.

### <Functional Configuration Example of Vehicle>

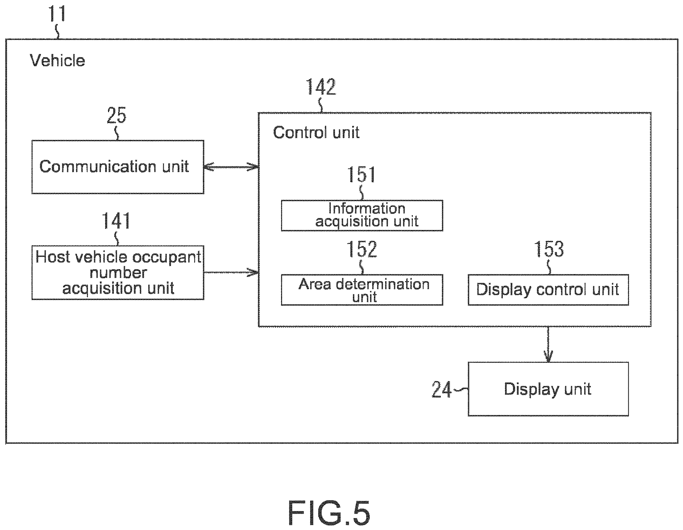

Next, a functional configuration example for the vehicle 11 shown in Fig. 1 to perform driving assistant to avoid a collision with a peripheral vehicle will be described. Fig. 5 is a diagram showing a functional configuration example of the vehicle 11 in such a case. Note that the components corresponding to those in Fig. 1 are denoted by the same reference symbols in Fig. 5, and description thereof will be appropriately omitted.

The vehicle 11 shown in Fig. 5 includes the communication unit 25, a host-vehicle-occupant-number acquisition unit 141, a control unit 142, and the display unit 24, and functions as a driving assistant apparatus that performs driving assistant.

The host-vehicle-occupant-number acquisition unit 141 acquires host-vehicle-occupant-number information indicating the number of occupants in the vehicle 11, and supplies it to the control unit 142.

For example, the host-vehicle-occupant-number acquisition unit 141 includes an indoor camera, and detects a person from an indoor image obtained by imaging the interior of the vehicle 11 to acquire the host-vehicle-occupant-number information from the detection result. Alternatively, the host-vehicle-occupant-number acquisition unit 141 may detect a seat belt wearing state in the interior of the vehicle 11 to acquire the host-vehicle-occupant-number information from the detection result. Further, the host-vehicle-occupant-number acquisition unit 141 may acquire the host-vehicle-occupant-number information on the basis of the operation input of the number of occupants or the boarding position by the occupant or the like.

Note that the host-vehicle-occupant-number acquisition unit 141 may acquire not only information indicating the number of occupants in the vehicle 11 but also information indicating an attribute of an occupant, .e.g., whether the occupant is an adult or a child, and information indicating the boarding position of each occupant.

The control unit 142 is realized by, for example, the integrated ECU 31 shown in Fig. 1, particularly by the driving control ECU 51, and executes driving assistant processing performed in the vehicle 11. The control unit 142 includes an information acquisition unit 151, a driving assistant processing unit 152, and a display control unit 153.

The information acquisition unit 151 appropriately controls the communication unit 25 to receive the peripheral vehicle information by inter-vehicle communication with a peripheral vehicle present around the vehicle 11, and acquires the received peripheral vehicle information from the communication unit 25. The peripheral vehicle information may be acquired at regular intervals, i.e., periodically, or may be acquired irregularly.

The driving assistant processing unit 152 performs driving assistant processing that is processing of performing driving assistant for avoiding a collision with the peripheral vehicle by controlling the travelling of the vehicle 11 on the basis of the peripheral vehicle information acquired by the information acquisition unit 151 or the host-vehicle-occupant-number information supplied from the host-vehicle-occupant-number acquisition unit 141.

Specifically, for example, processing of controlling the distance between the vehicle 11 and peripheral vehicles travelling in front of and behind the vehicle 11, processing of controlling the lane change of the vehicle 11, processing of controlling the sudden breaking of the vehicle 11, i.e., sudden stop or abrupt deceleration, or the like is performed as the driving assistant processing.

The display control unit 153 controls the display unit 24 to display various images.

### <Example of Peripheral Vehicle Information>

Incidentally, in the case where the vehicle 11 performs driving assistant processing, the peripheral vehicle information received from a peripheral vehicle by inter-vehicle communication is used.

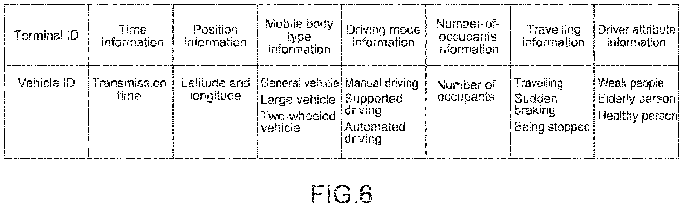

This peripheral vehicle information includes one or more types of information regarding the peripheral vehicle. For example, as shown in Fig. 6, the peripheral vehicle information includes information indicating the number of occupants in the peripheral vehicle, information indicating the travelling state of the peripheral vehicle, and the like.

That is, in the example shown in Fig. 6, the peripheral vehicle information includes a terminal ID, time information, position information, moving object type information, driving mode information, number-of-occupants information, travelling information, and driver attribute information as shown in the upper column of the figure.

The terminal ID is a vehicle ID that identifies the peripheral vehicle as the transmission source of the peripheral vehicle information, and the time information is information indicating the transmission time of the peripheral vehicle information.

Further, the position information is information indicating the position such as the latitude and longitude of the peripheral vehicle at the time of transmission of the peripheral vehicle information, and the moving object type information is information indicating the type of the peripheral vehicle, such as a general vehicle, a large vehicle, and a two-wheeled vehicle.

The driving mode information is information indicating which driving mode the peripheral vehicle is driven, such as manual driving, assisted driving, and automated driving, and the number-of-occupants information is information indicating the number of occupants in the peripheral vehicle.

Further, the travelling information is information indicating the travelling state of the peripheral vehicle, such as sudden braking, i.e., sudden stop or abrupt deceleration of the peripheral vehicle, being normally travelling, being stopped, and making a right turn. Note that the travelling information may include information such as the travelling speed of the peripheral vehicle.

The driver attribute information is information indicating the attribute of the driver of the peripheral vehicle, such as a healthy person, an elderly person, and other weak people.

Further, although the case where the terminal ID, the time information, the position information, the moving object type information, the driving mode information, the number-of-occupants information, the travelling information, and the driver attribute information are included as examples of the peripheral vehicle information will be described here, the peripheral vehicle information may be any type of information as long as it relates to the peripheral vehicle. For example, the peripheral vehicle information may be one including at least any one of pieces of information shown in Fig. 6.

In the vehicle 11, driving of the vehicle 11 is controlled on the basis of such peripheral vehicle information.

### <Regarding Driving assistant Processing>

Next, a specific example of driving assistant for avoiding a collision with a peripheral vehicle, which is performed by the vehicle 11, will be described.

Note that in the following, among peripheral vehicles around the vehicle 11, a peripheral vehicle in front of the vehicle 11 will be referred to particularly also as the forward vehicle and a peripheral vehicle behind the vehicle 11 will be referred to also as the rearward vehicle. Note that the forward vehicle and the rearward vehicle may each be a peripheral vehicle in a lane different from that of the vehicle 11. However, in the following, description will be continued assuming that particularly the forward vehicle and the rearward vehicle are travelling in the same lane as that of the vehicle 11.

Further, in the following, in order to make it easy to distinguish between the vehicle 11 and the peripheral vehicle, the vehicle 11 that performs driving assistant processing will be referred to also as the host vehicle 11 or the host vehicle as appropriate.

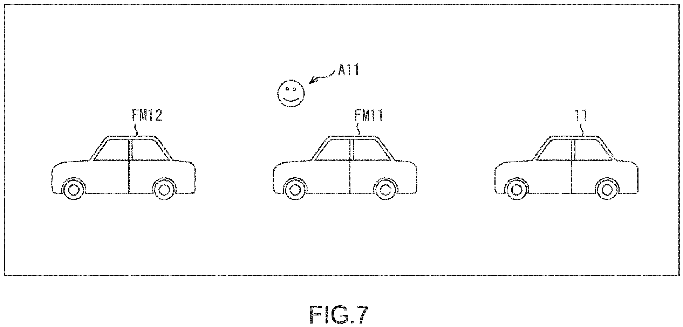

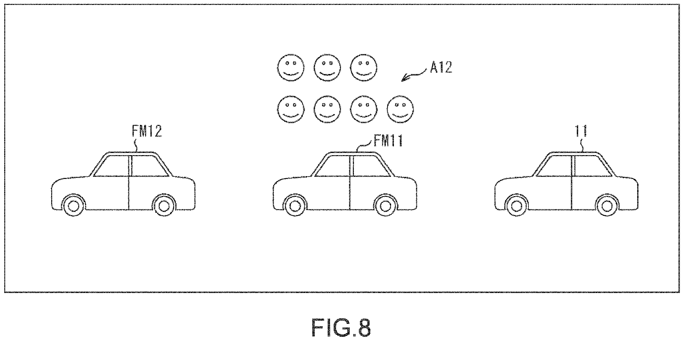

First, a case where the host vehicle performs driving assistant processing corresponding to the number of occupants in the forward vehicle will be described with reference to Fig. 7 and Fig. 8. Note that in Fig. 7 and Fig. 8, the components corresponding to each other are denoted by the same reference symbols, and description thereof will be appropriately omitted.

For example, as shown in Fig. 7, assumption is made that a forward vehicle FM11 is travelling in front of the host vehicle 11 and a forward vehicle FM12 is travelling in front of the forward vehicle FM11. Here, the forward vehicle FM11 is the nearest peripheral vehicle in front of the host vehicle 11, and the forward vehicle FM12 is the second nearest peripheral vehicle in front of the host vehicle 11.

The vehicle 11 typically acquires peripheral vehicle information from the forward vehicle FM11 to perform driving of the host vehicle.

For example, assumption is made that the number of occupants in the forward vehicle FM11 is one as shown by an arrow A11. In the case where the forward vehicle FM11 closest to the host vehicle is small as described above, when the forward vehicle FM11 suddenly stops (sudden braking), there is a high possibility that the forward vehicle FM11 is capable of safely stopping, and there is a low possibility that the host vehicle collides with the forward vehicle FM11 even in the case where the host vehicle 11 suddenly stops due to the sudden stop of the forward vehicle FM11. That is, the probability of occurrence of a collision accident or the like is low.

In this regard, in the case where the number of occupants in the forward vehicle FM11 is not more than a predetermined number of people, the vehicle 11 controls driving of the host vehicle so that the distance between the vehicle 11 and the forward vehicle FM11 is a normal distance between the vehicles, e.g., a predetermined distance La between the vehicles.

Meanwhile, for example, assumption is made that the number of occupants in the forward vehicle FM11 is seven as shown by an arrow A12 in Fig. 8. In the case where the number of occupants is large as described above, it takes a long time for the forward vehicle FM11 to completely stop after performing sudden braking, which makes an accident easy to occur.

For example, in the case where the forward vehicle FM12 travelling two vehicles before the host vehicle suddenly stops, it is difficult for the forward vehicle FM11 to suddenly stop even when the forward vehicle FM11 performs sudden braking. Therefore, there is a possibility that the forward vehicle FM11 collides with the forward vehicle FM12. In such a case, for example, also the host vehicle 11 is delayed in performing sudden braking, which may make the host vehicle and the forward vehicle FM11 collide with each other. This can happen also when, for example, the forward vehicle FM11 itself suddenly stop regardless of the forward vehicle FM12.

In this regard, in the case where the number of occupants in the forward vehicle FM11 is larger than the predetermined number of people, in order to prevent such a collision to occur, the vehicle 11 controls driving of the host vehicle so that the distance between the host vehicle and the forward vehicle FM11 is a distance Lb between the vehicles larger (longer) than the normal distance La between the vehicles. In other words, the target distance between vehicles is set to Lb (in which La<Lb), and processing of controlling the distance between vehicles in accordance with the setting is executed as driving assistant processing for avoiding a collision.

In the case where the number of occupants in the forward vehicle FM11 travelling in front is larger as described above, by controlling the distance between vehicles so that the distance between the host vehicle and the forward vehicle FM11 is increased, i.e., a sufficient interval is ensured, it is possible to prevent a collision between the forward vehicle FM11 and the host vehicle from occurring. In other words, it is possible to realize more appropriate driving assistant.

Note that although the example in which the distance Lb between the vehicles is a value larger than the normal distance La between the vehicles has been described here, the distance La between the vehicles does not necessarily need to be particularly determined at the normal time in assisted driving or the like, and the distance Lb between the vehicles having a sufficient length may be determined in the case where the number of occupants in the forward vehicle FM11 is large.

Further, the distance La between the vehicles and the distance Lb between the vehicles may each be a predetermined fixed value or an adaptively determined value. Further, the distance Lb between the vehicles may be determined on the basis of the value of the distance La between the vehicles. Further, any one of the distance La between the vehicles and the distance Lb between the vehicles may be a fixed value and the other value may be adaptively determined.

For example, in the case where the distance La between the vehicles or the distance Lb between the vehicles are adaptively determined, the distance between vehicles can be determined on the basis of the number of occupants in the forward vehicle FM11 or the host vehicle 11, the travelling speed of the forward vehicle FM11 or the host vehicle 11, the driving mode of the forward vehicle FM11, the type of the forward vehicle FM11, attributes or boarding positions of occupants such as drivers of the forward vehicle FM11 or the host vehicle 11, and the like.

At this time, for example, as the number of occupants in the forward vehicle FM11 or the host vehicle 11 increases and the travelling speed of the forward vehicle FM11 or the host vehicle 11 increases (larger), it only needs to increase the distance La between the vehicles or the distance Lb between the vehicles.

The travelling speed of the forward vehicle FM11 may be acquired from the peripheral vehicle information. Alternatively, the vehicle 11 may measure the travelling speed. Further, the driving mode of the forward vehicle FM11, the type of the vehicle, and the attribute of the driver can be acquired from the driving mode information, the moving object type information, and the driver attribute information included in the peripheral vehicle information.

Further, as the driving assistant processing for avoiding a collision, not only the peripheral vehicle information of the forward vehicle FM11 but also the peripheral vehicle information of the forward vehicle FM12 may be used for performing processing of controlling driving. In such a case, the vehicle 11 acquires the peripheral vehicle information from the forward vehicle FM11, and then further acquires, in the case where the number of occupants in the forward vehicle FM11 is large, the peripheral vehicle information from also the forward vehicle FM12. Then, the vehicle 11 performs driving assistant processing for avoiding a collision, on the basis of the two pieces of peripheral vehicle information.

Specifically, for example, by acquiring the peripheral vehicle information from also the forward vehicle FM12, sudden stop (sudden braking) of the forward vehicle FM12 can be detected from the travelling information included in the peripheral vehicle information. In such a case, it is possible to cause the host vehicle 11 to suddenly stop at an earlier timing as compared with the case where the host vehicle is caused to suddenly stop after detecting the sudden stop of the forward vehicle FM11, and it is possible to significantly suppress the occurrence of a collision with the forward vehicle FM11.

In the case where the number of occupants in the forward vehicle FM11 is large and the possibility of a collision is high as described above, by acquiring the peripheral vehicle information of both the forward vehicle FM11 and the forward vehicle FM12 to perform driving assistant, it is possible to realize more appropriate driving assistant.

Note that in the case where the number of occupants in the forward vehicle FM11 is large, pieces of peripheral vehicle information of three or more forward vehicles, e.g., not only the peripheral vehicle information of the forward vehicle FM12 but also peripheral vehicle information of the forward vehicle travelling in front of the forward vehicle FM12 may be acquired. At this time, how many pieces of peripheral vehicle information of peripheral vehicles is to be acquired may be determined corresponding to the distance between the forward vehicle FM11 and the host vehicle 11, the number of occupants or the travelling speed of the forward vehicle FM11 or the host vehicle 11, and the like.

Further, as the driving assistant processing for avoiding a collision, only any one of processing of controlling the distance between vehicles and processing of acquiring pieces of peripheral vehicle information from more peripheral vehicles to control driving may be performed. However, both of them may be performed.

### <Description of Driving Control Processing>

Now, an example of driving control processing that is processing performed by the vehicle 11 to control the driving thereof while appropriately performing the driving assistant processing described above will be described.

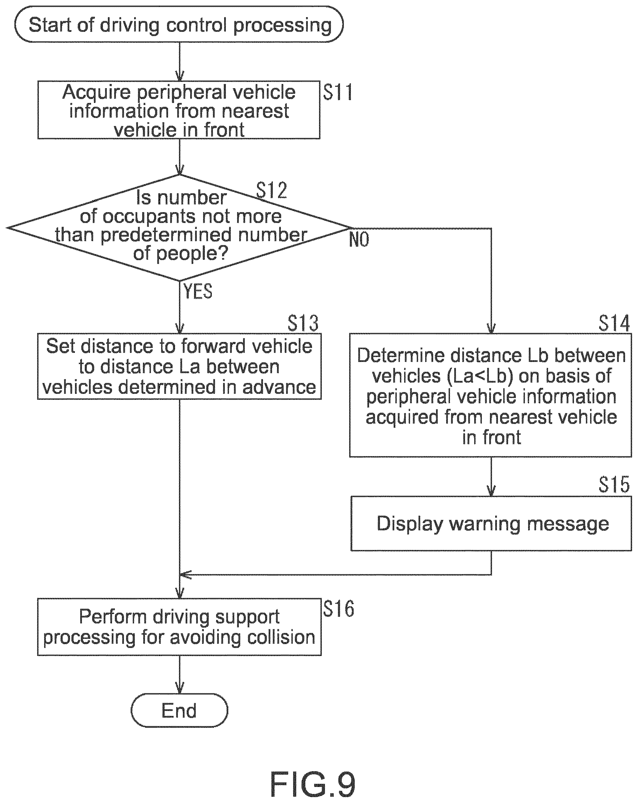

First, driving control processing performed by the vehicle 11 in the case of controlling the distance between vehicles as driving assistant will be described with reference to the flowchart of Fig. 9.

In Step S11, the information acquisition unit 151 acquires peripheral vehicle information from the nearest vehicle in front of the host vehicle 11.

That is, the information acquisition unit 151 controls the communication unit 25 to perform inter-vehicle communication with the peripheral vehicle travelling immediately before the host vehicle 11, i.e., the forward vehicle traveling in front of the host vehicle 11 in the front direction, and receive peripheral vehicle information from the forward vehicle. Then, the information acquisition unit 151 acquires the received peripheral vehicle information from the communication unit 25.

In Step S12, the driving assistant processing unit 152 determines whether or not the number of occupants in the forward vehicle traveling immediately before the host vehicle is not more than a predetermined number of people set in advance, on the basis of the number-of-occupants information included in the peripheral vehicle information acquired by the information acquisition unit 151.

Note that in Step S12, the number of people, which is a threshold value for comparing with the number of occupants in the forward vehicle, may be a fixed number of people determined in advance or an adaptively determined number of people corresponding to the travelling speed or the like of the forward vehicle or the host vehicle 11.

In the case where it is determined that the number of occupants is not more than the predetermined number of people in Step S12, the driving assistant processing unit 152 sets, in Step S13, the target distance to the forward vehicle to the distance La between the vehicles determined in advance, and then the processing proceeds to Step S16.

Meanwhile, in the case where it is determined that the number of occupants is not equal to or less than the predetermined number of people, i.e., the number of occupants is more than the predetermined number of people in Step S12, the processing proceeds to Step S14.

In Step S14, the driving assistant processing unit 152 determines the distance Lb between the vehicles (in which La<Lb) that is a target distance to the forward vehicle, on the basis of the peripheral vehicle information acquired from the nearest forward vehicle in front of the host vehicle 11, i.e., the peripheral vehicle information acquired in Step S11.

As an example, the driving assistant processing unit 152 determines the distance Lb between the vehicles corresponding to the number of occupants in the forward vehicle indicated by the number-of-occupants information included in the peripheral vehicle information, for example. Specifically, for example, the distance Lb between the vehicles is made larger as the number of occupants increases. Note that although an example in which processing of performing control to set the distance between vehicles to Lb in the case where the number of occupants in the forward vehicle is large is performed as the driving assistant processing for avoiding a collision will be described here, processing of controlling the lane change of the vehicle 11 in the case where the number of occupants in the forward vehicle is large may be performed as the driving assistant processing for avoiding a collision.

In Step S15, the display control unit 153 generates a warning message corresponding to the number of occupants in the forward vehicle acquired from the peripheral vehicle information, supplies it to the display unit 24, and causes the display unit 24 to display the warning message.

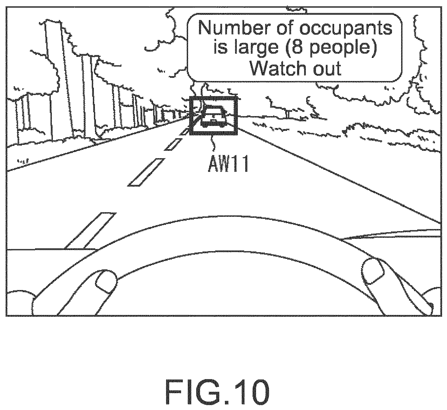

For example, in the case where the display unit 24 is a transmissive display provided on a windshield part, the display control unit 153 causes the display unit 24 to display a message as shown in Fig. 10. In the example shown in Fig. 10, the character "Number of occupants is large (8 people). Watch out." as a message is displayed in the vicinity of the forward vehicle.

By attracting the driver's attention in addition to driving control for avoiding a collision as described above, it is possible to further improve the effect of preventing a collision accident or the like from occurring. In particular, in this example, by displaying the specific number of people, i.e., the number of occupants in the forward vehicle "8", it is possible to provide the driver with useful information for avoiding a collision.

Further, when displaying a warning message, for example, display of surrounding, by a frame or the like, the forward vehicle part to be aware of or connecting the message and the forward vehicle with an arrow or the like may be performed on the display unit 24. In the example in Fig. 10, a frame AW11 is displayed so that it is possible to easily grasp which forward vehicle the displayed message is for, and the forward vehicle part is surrounded by the frame AW11. Accordingly, the driver is capable of instantaneously grasping which vehicle should be aware of.

Further, as will be described later, the vehicle 11 is capable of acquiring peripheral vehicle information from also a rearward vehicle travelling behind the vehicle 11. In this regard, for example, a warning message may be displayed corresponding to the number of occupants in both the forward vehicle and the rearward vehicle, for example.

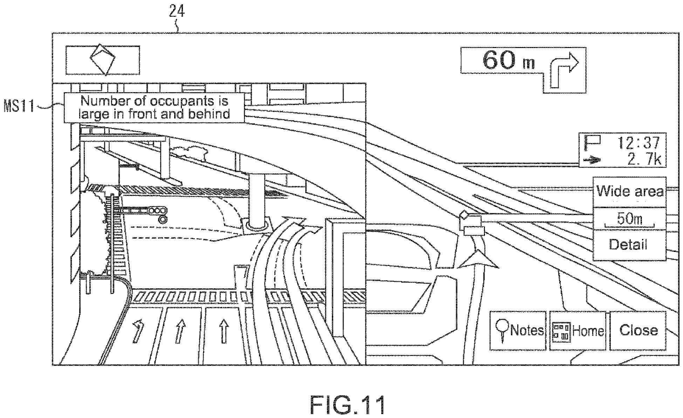

In such a case, for example, the display control unit 153 causes the display unit 24 to display a message as shown in Fig. 11.

In the example shown in Fig. 11, the display unit 24 is used also as a display of a car navigation system, and a warning message MS11 is superimposed on the display screen for car navigation and displayed on the display unit 24.

In particular, in this example, the character "Number of occupants is large in front and behind" as the message MS11 is displayed on the guidance route part of the host vehicle 11 on the display screen for car navigation. By watching this message MS11, the driver is capable of instantaneously grasping that the number of occupants in not only the forward vehicle but also the rearward vehicle is large. Note that also in this case, the specific number of occupants in the forward vehicle and the rearward vehicle may be displayed.

Further, although the example in which a message for attracting the driver's attention corresponding to the number of occupants in the forward vehicle is displayed has been described here, the present technology is not limited to this, and voice, vibration, or the like may be used for attracting the driver's attention. In such a case, for example, the control unit 142 may drive a speaker to output a voice warning message. Further, a text message, a voice message, vibration, and the like may be arbitrarily combined and output to attract attention.

Returning to description of the flowchart of Fig. 9, in the case where the warning message is displayed, then, the processing proceeds to Step S16.

When the processing of Step S13 or Step S15 is performed the driving assistant processing unit 152 performs driving assistant processing for avoiding a collision corresponding to the determined distance between vehicles in Step S16, and the driving control processing is finished.

Specifically, for example, the driving assistant processing unit 152 identifies the actual distance between the host vehicle 11 and the forward vehicle on the basis of the measurement result supplied from the radar 27 or the lidar 28. Then, the driving assistant processing unit 152 generates a control signal for controlling driving of the braking device 34, the engine 35, or the driving motor 37 so that the actual distance between vehicles is the target distance between vehicles determined by the processing of Step S13 or Step S14, i.e., La or Lb.

The driving assistant processing unit 152 supplies the generated control signal to a necessary block out of the braking device 34, the engine 35, and the driving motor 37 to control the driving thereof, thereby performing processing of controlling the distance to the forward vehicle as the driving assistant processing for avoiding a collision.

As described above, the vehicle 11 acquires the peripheral vehicle information from the forward vehicle, and controls the distance between vehicles corresponding to the number of occupants in the forward vehicle. In this way, it is possible to perform appropriate driving assistant considering the state of the forward vehicle that greatly affects the collision with the host vehicle 11.

### <Another Example of Driving Control Processing>

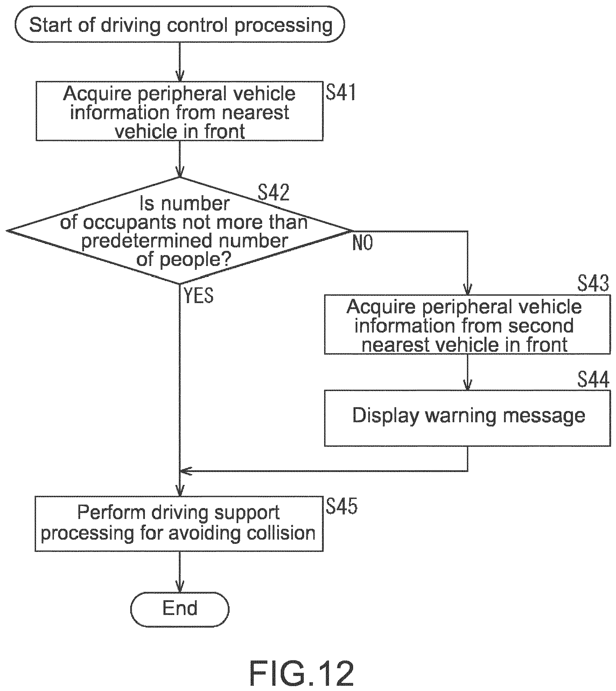

Further, as described above, as the driving assistant for avoiding a collision, also peripheral vehicle information of the forward vehicle positioned two vehicles before may be used for performing driving control. Hereinafter, driving control processing performed by the vehicle 11 in such a case will be described with reference to the flowchart of Fig. 12.

Note that since the processing of Step S41 and Step S42 is similar to that of Step S11 and Step S12 in Fig. 9, description thereof will be omitted.

In the case where it is determined that the number of occupants is not more than a predetermined number of people in Step S42, the processing proceeds to Step S45.

Meanwhile, in the case where it is determined that the number of occupants is not equal to or less than a predetermined number of people in Step S42, the processing proceeds to Step S43.

In Step S43, the information acquisition unit 151 acquires peripheral vehicle information from the second nearest vehicle in front of the host vehicle 11.

In Step S43, similarly to the processing of Step S41, the information acquisition unit 151 controls the communication unit 25 to receive peripheral vehicle information from the forward vehicle travelling two vehicles before the host vehicle 11, i.e., the forward vehicle second nearest to the host vehicle in the front direction, and acquires the peripheral vehicle information.

When the peripheral vehicle information of the second nearest vehicle in front is acquired, then, the processing of Step S44 is performed, and the processing proceeds to Step S45. Since the processing of Step S44 is similar to the processing of Step S15 in Fig. 9, description thereof will be omitted.

Note that in Step S44, it may appropriately display that the peripheral vehicle information is being received from not only the forward vehicle nearest to the host vehicle but also the second nearest forward vehicle, and display the number of occupants in the vehicle, for example.

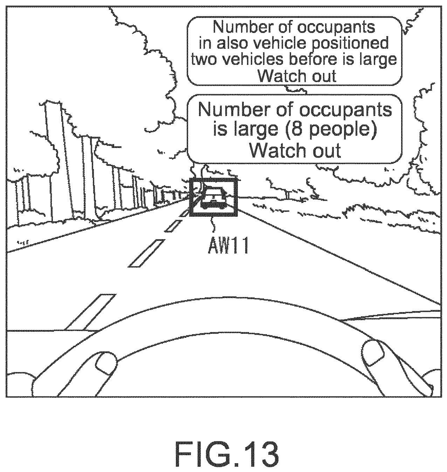

In such a case, in Step S44, the display control unit 153 causes the display unit 24 to display a message as shown in Fig. 13, for example. Note that the components corresponding to those in Fig. 10 are denoted by the same reference symbols in Fig. 13 and description thereof will be appropriately omitted.

In the example shown in Fig. 13, in addition to display of a warning message for the forward vehicle travelling immediately before the host vehicle 11 shown in Fig. 10, a text message "Number of occupants in also vehicle positioned two vehicles before is large. Watch out." for the forward vehicle travelling two vehicles before is displayed on the upper side in Fig. 13.

In particular, in this example, since it is difficult for the driver to see the forward vehicle positioned two vehicles before, the warning message for the forward vehicle positioned two vehicles before is displayed on the upper side of the message for the forward vehicle positioned immediately before. Note that in the case where the driver is capable of seeing the forward vehicle positioned two vehicles before, the display control unit 153 performs such display that the forward vehicle positioned two vehicles before is surrounded by a frame similar to the frame AW11, and displays a message for the forward vehicle positioned two vehicles before in the vicinity of this frame.

In the case where it is determined that the number of occupants is not more than the predetermined number of people in Step S42 or the warning message is displayed in Step S44, the processing of Step S45 is performed.

That is, in Step S45, the driving assistant processing unit 152 performs driving assistant processing for avoiding a collision on the basis of the peripheral vehicle information of the forward vehicle, and the driving control processing is finished.

For example, in Step S45, the driving assistant processing unit 152 controls, on the basis of the travelling information included in the peripheral vehicle information of the forward vehicle, the operation of the braking device 34, the engine 35, the driving motor 37, and the like so that the host vehicle 11 does not collide with the forward vehicle.

At this time, for example, in the case where sudden braking of the forward vehicle nearest to the host vehicle or the forward vehicle second nearest to the host vehicle is detected from the travelling information, the driving assistant processing unit 152 supplies a control signal for instructing sudden braking and supplies it to the braking device 34 to cause the host vehicle 11 to suddenly stop. In particular, in the case where the number of occupants in the nearest vehicle in front is large, it is possible to perform appropriate driving control at an earlier timing by acquiring peripheral vehicle information from also the second nearest forward vehicle.

As described above, the vehicle 11 acquires the peripheral vehicle information from the forward vehicle, acquires, corresponding to the number of occupants in the forward vehicle, the peripheral vehicle information from also the vehicle in front of the forward vehicle, and performs driving control such as sudden braking on the basis of the peripheral vehicle information. In this way, it is possible to perform appropriate driving assistant considering the state of the forward vehicle that greatly affects the collision with the host vehicle 11. In particularly, in the case where the number of occupants in the forward vehicle traveling immediately before is large, it is possible to perform more appropriate driving assistant by acquiring peripheral vehicle information from also the forward vehicle travelling in front of that forward vehicle.

Note that the driving control processing described with reference to Fig. 9 and the driving control processing described with reference to Fig. 12 may be performed simultaneously, i.e., in combination. In this way, in the case where the number of occupants in the forward vehicle immediately before is large, it is possible to avoid the occurrence of a collision by controlling the driving with a wider distance between vehicles using peripheral vehicle information of more vehicles.

### <Second Embodiment>

### <Regarding Driving assistant Processing>

Further, although the example in which the peripheral vehicle information is acquired from the forward vehicle to perform driving assistant has been described above, the peripheral vehicle information may be acquired from the rearward vehicle to perform driving assistant.

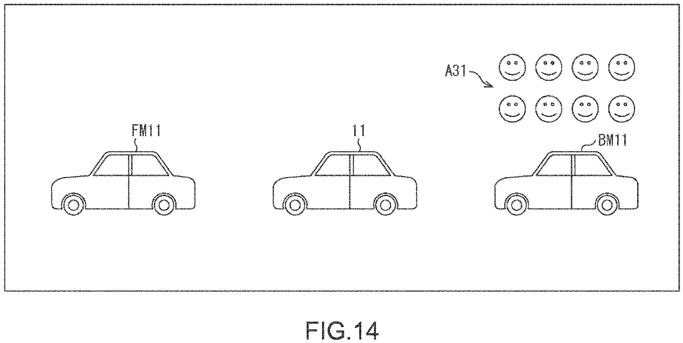

For example, as shown in Fig. 14, assumption is made that the forward vehicle FM11 is travelling in front of the host vehicle 11 and a rearward vehicle BM11 is travelling behind the host vehicle 11. Note that the components corresponding to those in Fig. 7 are denoted by the same reference symbols in Fig. 14 and description thereof will be appropriately omitted.

In the example shown in Fig. 14, the vehicle 11 acquire peripheral vehicle information from the rearward vehicle BM11, and performs driving assistant of the host vehicle corresponding to the number of occupants in the rearward vehicle BM11 indicated by the peripheral vehicle information.

For example, in the case where the number of occupants in the rearward vehicle BM11 is small, when performing sudden braking for some reason, since the rearward vehicle BM11 is capable of immediately stopping, the possibility that the rearward vehicle BM11 collides with the host vehicle 11 is low.

Therefore, in such a case, the vehicle 11 sets the distance between the vehicle 11 and the rearward vehicle BM11 to the normal distance between vehicles, e.g., a predetermined distance Ka between the vehicles, and controls the driving of the host vehicle without particularly considering the rearward vehicle BM11.

Meanwhile, as shown by an arrow A31, assumption is made that the number of occupants in the rearward vehicle BM11 is eight, for example. In the case where the number of occupants is large as described above, it takes a long time for the rearward vehicle BM11 to completely stop after performing sudden braking, which makes an accident easy to occur. That is, the possibility that the rearward vehicle BM11 collides with the host vehicle 11 at the time of sudden stop is high.

In this regard, in the case where the number of occupants in the rearward vehicle BM11 is larger than the predetermined number of people, the vehicle 11 controls the driving of the host vehicle so that the distance between the vehicle 11 and the rearward vehicle BM11 is a distance Kb between the vehicles larger than the normal distance Ka between the vehicles, in order to prevent a collision from occurring. In other words, the distance between vehicles is set to Kb (in which Ka<Kb), and processing of controlling the distance between vehicles in accordance with the setting is executed as driving assistant processing for avoiding a collision.

In the case where the number of occupants in the rearward vehicle BM11 travelling behind is large, by controlling the distance between vehicles so that the distance to the rearward vehicle BM11 is made larger, the possibility that a collision between the rearward vehicle BM11 and the host vehicle can be avoided increases. That is, it is possible to realize more appropriate driving assistant.

Note that although the example in which the distance Kb between the vehicles is a value larger the normal distance Ka between the vehicles has been described here, the distance Ka between the vehicles does not necessarily need to be particularly determined at the normal time and the distance Kb between the vehicles having a sufficient length may be determined in the case where the number of occupants in the rearward vehicle BM11 is large, similarly to the case of the distance to the forward vehicle.

Further, similarly to the distance to the forward vehicle, the distance Ka or the distance Kb to the rearward vehicle BM11 may be a fixed value or an adaptively determined value. Further, the distance Kb between the vehicles may be determined on the basis of the value of the distance Ka between the vehicles. Further, any one of the distance Ka between the vehicles and the distance Kb between the vehicles may be a fixed value, and the other value may be adaptively determined.

For example, in the case where the distance Ka between the vehicles or the distance Kb between the vehicles is adaptively determined, the distance between vehicles can be determined on the basis of the number of occupants in the rearward vehicle BM11 or the host vehicle 11, the traveling speed of the rearward vehicle BM11 or the host vehicle 11, the driving mode of the rearward vehicle BM11, the type of the rearward vehicle BM11, attributes or boarding positions of occupants such as the driver of the rearward vehicle BM11 and the host vehicle 11, and the like.

As described above, the vehicle 11 performs, as the driving assistant processing for avoiding a collision with the rearward vehicle BM11, processing of controlling the distance between the vehicle 11 and the rearward vehicle BM11 corresponding to the number of occupants in the rearward vehicle BM11. Note that in the case where the number of occupants in the rearward vehicle BM11 is large, the vehicle 11 may perform processing of controlling the lane change as the driving assistant processing for avoiding a collision with the rearward vehicle BM11.

Further, as the driving assistant processing for avoiding a collision, processing of controlling the driving using peripheral vehicle information of the forward vehicle FM11 may be performed corresponding to the number of occupants in the rearward vehicle BM11.

In such a case, the vehicle 11 acquires the peripheral vehicle information from the rearward vehicle BM11, and then, further acquires, in the case where the number of occupants in the rearward vehicle BM11 is large, peripheral vehicle information from the forward vehicle FM11. Then, the vehicle 11 performs the driving assistant processing for avoiding a collision on the basis of the peripheral vehicle information of the forward vehicle FM11.

Specifically, as the driving assistant processing based on the peripheral vehicle information of the forward vehicle FM11, processing of controlling the sudden braking or lane change corresponding to the travelling state of the forward vehicle FM11, or the like is performed.

For example, by acquiring the peripheral vehicle information of the forward vehicle FM11, the sudden stoop (sudden braking) of the forward vehicle FM11 can be detected from the travelling information included in the peripheral vehicle information. In the case where such sudden stop of the forward vehicle FM11 is detected, by immediately causing the host vehicle 11 to suddenly stop or change lanes, it is possible to further increase the possibility of avoiding a collision between the host vehicle 11 and the rearward vehicle BM11.

Note that regarding whether to perform, when the forward vehicle FM11 suddenly stops, sudden braking (sudden stop) or change lanes of the host vehicle 11, which processing is to be performed may be determined in advance. Further, any of the sudden braking and the lane change may be selectively performed corresponding to the situation around the host vehicle 11.

For example, in the case where any of the sudden braking and the lane change is selectively performed, the selection only needs to be performed corresponding to the distance between the host vehicle 11 and the forward vehicle FM11 at that time, the travelling state of the vehicle in the destination lane, i.e., whether or not there is a peripheral vehicle in the destination lane, and the like. At this time, whether or not there is another peripheral vehicle in the destination lane may be specified on the basis of the side image acquired by the side view camera 29 or by performing inter-vehicle communication with a peripheral vehicle in an adjacent lane to receive peripheral vehicle information in advance.

Further, in the case where the number of occupants in the rearward vehicle BM11 is large, the host vehicle 11 may perform, when the distance to the forward vehicle FM11 is not more than a predetermined distance, sudden braking even in the case where the forward vehicle FM11 does not perform sudden braking. In addition, in the case where the number of occupants in the rearward vehicle BM11 is large, the host vehicle 11 may change lanes before the sudden stop or the like of the forward vehicle FM11 occurs, i.e., when the forward vehicle FM11 is performing normal travelling.

As described above, also by performing processing of controlling the sudden braking or lane change of the host vehicle 11 as the driving assistant processing for avoiding a collision, it is possible to avoid a collision with the rearward vehicle BM11. That is, it is possible to perform more appropriate driving assistant.

Note that in the case of performing driving assistant corresponding to the number of occupants in the rearward vehicle, only any one of the above-mentioned processing of controlling the distance between vehicles and the processing of controlling the sudden braking or lane change may be performed. However, both of them may be performed in combination.

### <Description of Driving Control Processing>

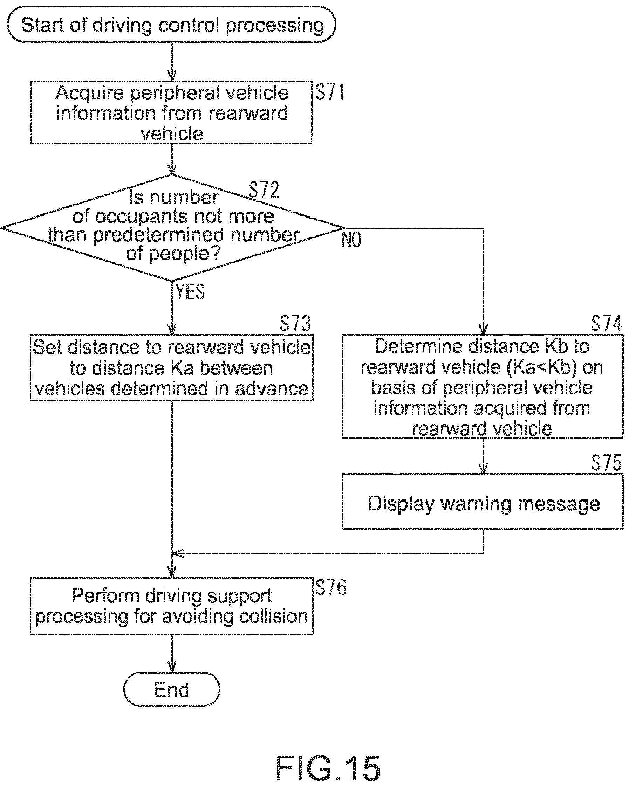

Next, processing performed in the case of performing driving assistant corresponding to the number of occupants in the rearward vehicle as described above will be described. That is, hereinafter, driving control processing performed by the vehicle 11 in the case of controlling the distance between vehicles as driving assistant will be described with reference to the flowchart of Fig. 15.

In Step S71, the information acquisition unit 151 acquires peripheral vehicle information from a rearward vehicle of the host vehicle 11. That is, in Step S71, processing similar to the processing of Step S11 in Fig. 9 is performed to acquire peripheral vehicle information from the nearest vehicle travelling behind the host vehicle 11.

In Step S72, the driving assistant processing unit 152 determines, on the basis of number-of-occupants information included in the peripheral vehicle information acquired by the information acquisition unit 151, whether or not the number of occupants in the rearward vehicle travelling behind the host vehicle is not more than a predetermined number of people set in advance.

Note that in Step S72, the number of people, which is a threshold value for comparing with the number of occupants in the rearward vehicle, may be a fixed number of people determined in advance or an adaptively determined number of people corresponding to the travelling speed or the like of the rearward vehicle or the host vehicle 11.

In the case where it is determined that the number of occupants is not more than the predetermined number of people in Step S72, the driving assistant processing unit 152 sets, in Step S73, the target distance to the rearward vehicle to the distance Ka between the vehicles determined in advance, and then the processing proceeds to Step S76.

Meanwhile, in the case where it is determined that the number of occupants is not equal to or less than the predetermined number of people, i.e., the number of occupants is more than the predetermined number of people in Step S72, the processing proceeds to Step S74.

In Step S74, the driving assistant processing unit 152 determines the distance Kb between the vehicles (in which Ka<Kb) that is a target distance to the rearward vehicle, on the basis of the peripheral vehicle information acquired from the rearward vehicle in Step S71.

As an example, the driving assistant processing unit 152 determines the distance Kb between the vehicles corresponding to the number of occupants in the rearward vehicle indicated by the number-of-occupants information included in the peripheral vehicle information, for example. Specifically, for example, the distance Kb between the vehicles is made larger as the number of occupants increases.

In Step S75, the display control unit 153generates a warning message corresponding to the number of occupants in the rearward vehicle acquired from the peripheral vehicle information, supplies it to the display unit 24, and causes the display unit 24 to display the warning message. Here, for example, processing similar to the processing of Step S15 in Fig. 9 is performed to display the warning message. Note that also in Step S75, the warning message is not limited to notification by display, notification by voice, vibration, or the like may be made, or display, voice, vibration and the like may be combined to perform notification.

In the case where the warning message is displayed, then the processing proceeds to Step S76.

When the processing of Step S73 or Step S75 is performed, the driving assistant processing unit 152 performs, in Step S76, driving assistant processing for avoiding a collision corresponding to the determined distance between vehicles, and the driving control processing is finished.

Specifically, the driving assistant processing unit 152 identifies the actual distance between the host vehicle 11 and the rearward vehicle on the basis of the measurement result supplied from the radar 27 or the lidar 28. Then, the driving assistant processing unit 152 generates a control signal for controlling driving of the braking device 34, the engine 35, or the driving motor 37 so that the actual distance between vehicles is the target distance between vehicles determined by the processing of Step S73 or Step S74, i.e., Ka or Kb.

The driving assistant processing unit 152 supplies the generated control signal to a necessary block out of the braking device 34, the engine 35, and the driving motor 37 to control the driving thereof, thereby performing processing of controlling the distance to the rearward vehicle as the driving assistant processing for avoiding a collision.

Further, in the case where the number of occupants in the rearward vehicle is larger than the predetermined number of people as described above, the driving assistant processing unit 152 may perform processing of controlling the lane change as the driving assistant processing for avoiding a collision.

As described above, the vehicle 11 acquires the peripheral vehicle information from the rearward vehicle, and controls the distance between vehicles corresponding to the number of occupants in the rearward vehicle. In this way, it is possible to perform appropriate driving assistant considering the state of the rearward vehicle that greatly affects the collision with the host vehicle 11.

### <Another Example of Driving Control Processing>

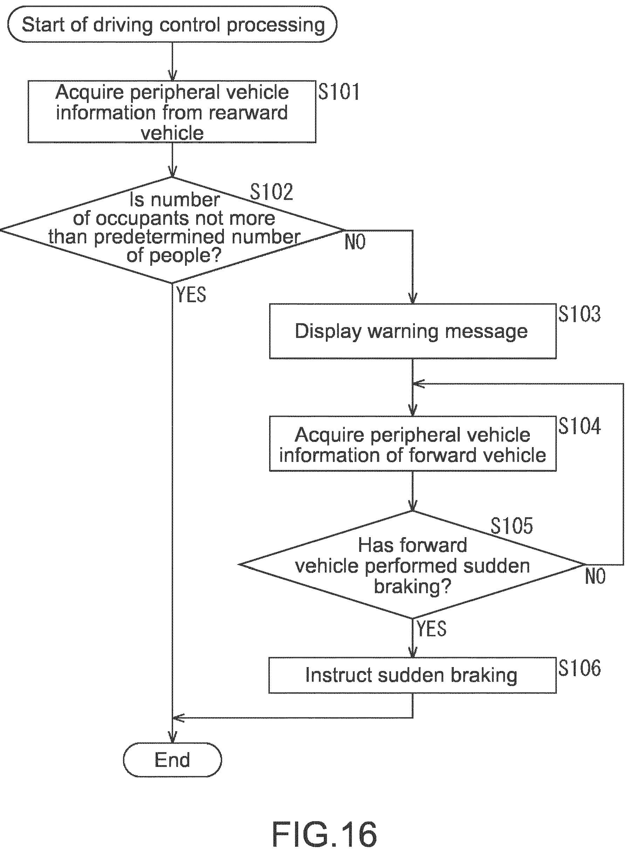

Further, as described above, in the case where the number of occupants in the rearward vehicle is large, sudden braking may be performed in accordance with the peripheral vehicle information acquired from the forward vehicle information, as the driving assistant for avoiding a collision. Hereinafter, driving control processing performed by the vehicle 11 in such a case will be described with reference to the flowchart of Fig. 16.

Note that since the processing of Step S101 and Step S102 is similar to that in Step S71 and Step S72 in Fig. 15, description thereof will be omitted.

In the case where it is determined that the number of occupants is not more than a predetermined number of people in Step S102, driving assistant processing for avoiding a collision is not particularly performed, and the driving control processing is finished.

Meanwhile, in the case where it is determined that the number of occupants is not equal to or less than the predetermined number of people, i.e., the number of occupants is more than the predetermined number of people in Step S102, the processing proceeds to Step S103.

In Step S103, the display control unit 153 generates a warning message corresponding to the number of occupants in the rearward vehicle acquired from the peripheral vehicle information, supplies it to the display unit 24, and causes the display unit 24 to display the warning message. That is, in Step S103, processing similar to that in Step S75 in Fig. 15 is performed.

In Step S104, the information acquisition unit 151 acquires peripheral vehicle information from the forward vehicle of the host vehicle 11. That is, in Step S104, processing similar to the processing of Step S11 in Fig. 9 is performed to acquire peripheral vehicle information from the nearest vehicle travelling in front of the host vehicle 11.

In Step S105, the driving assistant processing unit 152 determined whether or not the forward vehicle has performed sudden braking (sudden stop), on the basis of the traveling information included in the peripheral vehicle information acquired in Step S104.

In the case where it is determined in Step S105 that the sudden braking has not been performed, the processing returns to Step S104, and the above-mentioned processing is repeatedly performed. That is, in the case where the forward vehicle does not perform sudden braking, the driving assistant processing for avoiding a collision is not particularly performed.

Meanwhile, in the case where it is determined in Step S105 that the forward vehicle has performed sudden braking, the driving assistant processing unit 152 instructs, in Step S106, the braking device 34 to perform sudden braking.

That is, the driving assistant processing unit 152 generates a control signal for instructing sudden braking, supplies it to the braking device 34, and causes the braking device 34 to perform sudden braking, thereby executing processing of controlling sudden braking as the driving assistant processing for avoiding a collision.

When the sudden braking is performed in this way, the driving control processing is finished.

Note that in Step S106, although the case where the host vehicle 11 performs sudden braking has been described as an example, the present technology is not limited to this, and control of lane change may be performed as the driving assistant processing for avoiding a collision. In such a case, in Step S106, the driving assistant processing unit 152 generates a control signal for change lanes, and appropriately supplies the generated control signal to a necessary block such as the steering mechanism 26, the engine 35, and the driving motor 37 to control the driving of the vehicle 11, thereby changing lanes.

Further, in Step S106, the driving assistant processing unit 152 may select whether to perform sudden braking or change lanes as described above, and the driving assistant processing unit 152 may control the driving of the vehicle 11 on the basis of the selection result.

Further, although the example in which the peripheral vehicle information is acquired from the nearest vehicle in front of the host vehicle 11 in the case where the number of occupants in the rearward vehicle is large has been described here, peripheral vehicle information may be further acquired from also the forward vehicle travelling two vehicle before the host vehicle 11. In such a case, it is possible to perform the driving assistant processing for avoiding a collision in Step S106, corresponding to the travelling information of the two forward vehicles travelling in front, i.e., the travelling state. For example, in the case where the forward vehicle travelling two vehicles before performs sudden braking, the host vehicle 11 is capable of performing processing such as changing lanes immediately.

As described above, the vehicle 11 acquires the peripheral vehicle information from the rearward vehicle, and further acquires, corresponding to the number of occupants in the rearward vehicle, the peripheral vehicle information of the forward vehicle. Then, the vehicle 11 controls sudden braking corresponding to the travelling state of the forward vehicle. In this way, it is possible to perform appropriate driving assistant considering the state of the rearward vehicle and the forward vehicle that greatly affect a collision with the host vehicle 11.

Note that the driving control processing described with reference to Fig. 16 and the driving control processing described with reference to Fig. 9, Fig. 12, or Fig. 15 may be appropriately combined. In this way, it is possible to perform more appropriate driving assistant.

### <Modified Example 1 of Second Embodiment>

### <Description of Driving Control Processing>

Incidentally, the ease of a collision of the host vehicle 11 with a rearward vehicle varies also by the difference of the number of occupants between them. In this regard, the number of occupants in the host vehicle 11 and the number of occupants in the rearward vehicle may be compared with each other, and the driving assistant processing for avoiding a collision may be performed in accordance with the comparison result. In such a case, as an example, it only needs to perform the following control, for example.

That is, for example, in the case where the number of occupants in the rearward vehicle is larger than the number of occupants in the host vehicle, the possibility of the occurrence of a collision between the host vehicle and the rearward vehicle increase. Therefore, in such a case, the driving assistant processing for avoiding a collision is performed.

Further, in the case where the number of occupants in the rearward vehicle and the number of occupants in the host vehicle are the same, the possibility of the occurrence of a collision increases as the number of occupants of the vehicles increases. Therefore, only in the case where the number of occupants is large, the driving assistant processing for avoiding a collision is performed.

Further, for example, in the case where the number of occupants in the rearward vehicle is lower than the number of occupants in the host vehicle, the possibility of the occurrence of a collision between the host vehicle and the rearward vehicle is low. Therefore, in such a case, the driving assistant processing for avoiding a collision is not performed.

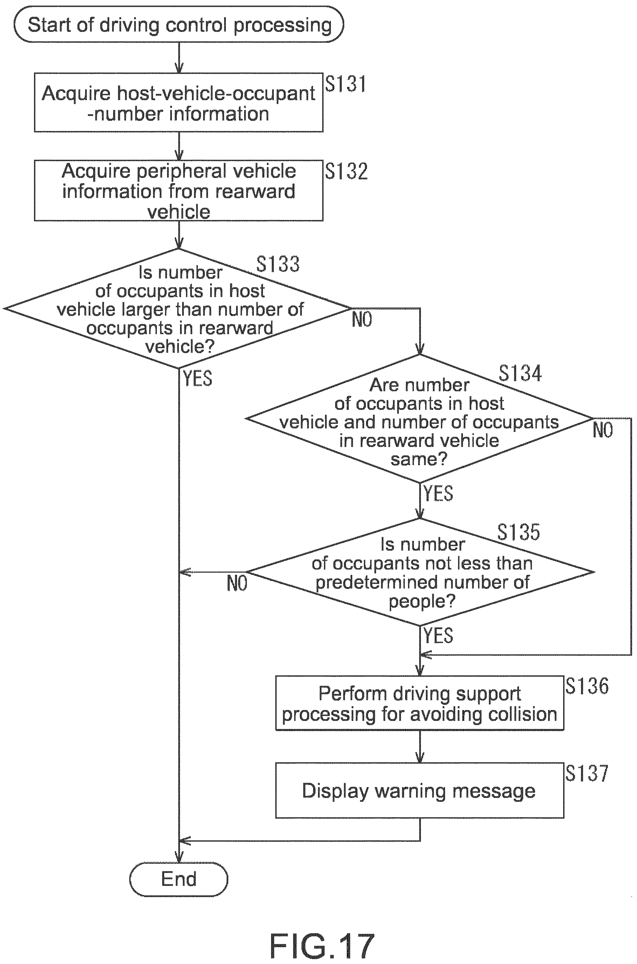

As described above, in the case of performing the driving assistant processing in accordance with the comparison result of the number of occupants, driving control processing shown in Fig. 17 is performed by the vehicle 11. Hereinafter, the driving control processing performed by the vehicle 11 will be described with reference to the flowchart of Fig. 17.

In Step S131, the host-vehicle-occupant-number acquisition unit 141 acquires host-vehicle-occupant-number information indicating the number of occupants in the host vehicle 11, and supplies it to the control unit 142. For example, the acquisition of the host-vehicle-occupant-number information is performed by detection of a person from the indoor image, detection of a seat belt wearing state, an operation input of the number of occupants, or the like.

In Step S132, the information acquisition unit 151 acquires peripheral vehicle information from the rearward vehicle. In Step S132, processing similar to the processing of Step S71 in Fig. 15 is performed to acquire peripheral vehicle information from the nearest vehicle traveling behind the host vehicle 11.

In Step S133, the driving assistant processing unit 152 compares the number of occupants in the host vehicle 11 indicated by the host-vehicle-occupant-number information acquired in Step S131 with the number of occupants in the rearward vehicle indicated by the peripheral vehicle information acquired in Step S132, and determines whether or not the number of occupants in the host vehicle 11 is larger than the number of occupants in the rearward vehicle.

In the case where it is determined that the number of occupants in the host vehicle 11 is larger than the number of occupants in the rearward vehicle in Step S133, i.e., the number of occupants in the rearward vehicle is smaller than the number of occupants of the host vehicle, the driving assistant processing for avoiding a collision is not particularly performed, and the driving control processing is finished.

Meanwhile, in the case where it is not determined in Step S133 that the number of occupants in the host vehicle 11 is larger than the number of occupants in the rearward vehicle, the driving assistant processing unit 152 determines, in Step S134, whether or not the number of occupants in the host vehicle and the number of occupants in the rearward vehicle are the same.

In the case where it is determined that the number of occupants is the same in Step S134, then, the processing proceeds to Step S135.

In Step S135, the driving assistant processing unit 152 determines whether or not the number of occupants in the host vehicle 11 is not less than a predetermined number of people.

In the case where it is determined that the number of occupants is less than the predetermined number of people in Step S135, the number of occupants in both the host vehicle 11 and the rearward vehicle is small, and the possibility of the occurrence of a collision is low. Therefore, the driving assistant processing for avoiding a collision is not particularly performed, and the driving control processing is finished.

Meanwhile, in the case where it is determined that the number of occupants is not less than the predetermined number of people in Step S135, the processing proceeds to Step S136.

Further, in the case where it is determined that the number of occupants is not the same in Step S134, i.e., the number of occupants in the rearward vehicle is larger than the number of occupants in the host vehicle 11, the processing proceeds to Step S136.

In the case where it is determined that the number of occupants is not less than the predetermined number of people in Step S135 or the number of occupants is not the same in Step S134, the driving assistant processing unit 152 performs the driving assistant processing for avoiding a collision in Step S136.

For example, in Step S136, processing of controlling the distance between vehicles similar to that in Step S76 in Fig. 15, processing of controlling sudden braking similar to that in Step S106 in Fig. 16, processing of controlling lane change, processing of performing these processes in combination, or the like is performed as the driving assistant processing for avoiding a collision. Note that when performing the driving assistant processing, the information acquisition unit 151 acquires the peripheral vehicle information of the forward vehicle as necessary. Then, control of sudden braking, lane change, or the like is performed corresponding to the travelling state of the forward vehicle acquired from the peripheral vehicle information.

In the case where the driving assistant processing is performed in this way, then, processing of displaying a warning message is performed in Step S137, and the driving control processing is finished. Since the processing of Step S137 is similar to the processing of Step S75 in Fig. 15, description thereof will be omitted.

As described above, the vehicle 11 compares the number of occupants in the host vehicle with the number of occupants in the rearward vehicle, and performs the driving assistant processing in accordance with the comparison result. In this way, it is possible to appropriate driving assistant considering the number of occupants in the host vehicle 11 and the rearward vehicle.

Note that the example in which the driving assistant processing is performed in accordance with the comparison result of the number of occupants between the host vehicle 11 and the rearward vehicle has been described here, the driving assistant processing unit 152 may compare the number of occupants in the host vehicle 11 with the number of occupants in the forward vehicle, and perform the driving assistant processing in accordance with the comparison result.

### <Configuration Example of Computer>

Incidentally, the series of processes described above can be performed by hardware or software. In the case where the series of processes are performed by the software, programs that constitute the software are installed in a computer. Examples of the computer include a computer incorporated in dedicated hardware, a general-purpose personal computer capable of executing various functions by installing various programs, and the like.

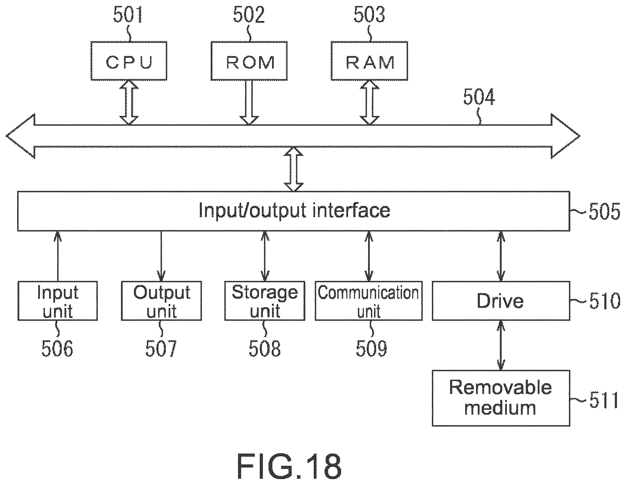

Fig. 18 is a block diagram showing a configuration example of the hardware of a computer that executes the series of processes described above by programs.

In a computer, a CPU (Central Processing Unit) 501, a ROM (Read Only Memory) 502, and a RAM (Random Access Memory) 503 are connected to each other via a bus 504.

To the bus 504, an input/output interface 505 is further connected. To the input/output interface 505, an input unit 506, an output unit 507, a storage unit 508, a communication unit 509, and a drive 510 are connected.

The input unit 506 includes an input switch, a button, a microphone, an image sensor, or the like. The output unit 507 includes a display, a speaker, or the like. The storage unit 508 includes a hard disk, a non-volatile memory, or the like. The communication unit 509 includes a network interface or the like. The drive 510 drives a removable medium 511 such as a magnetic disk, an optical disk, a magneto-optical disk, and a semiconductor memory.

In the computer 500 having the configuration as described above, for example, the CPU 501 loads a program stored in the storage unit 508 to the RAM 503 via the input/output interface 505 and the bus 504 and executes the program, thereby executing the series of processes described above.

The program executed by the computer 500 (CPU 501) can be provided by being recorded in the removable medium 511 as a package medium or the like, for example. Further, the program can be provided via a wired or wireless transmission medium, such as a local area network, the Internet, and a digital satellite broadcast.

In the computer, the program can be installed in the storage unit 508 via the input/output interface 505 by loading the removable medium 511 to the drive 510. Further, the program can be received by the communication unit 509 via a wired or wireless transmission medium and installed in the storage unit 508. In addition, the program can be installed in advance in the ROM 502 or the storage unit 508.

It should be noted that the program executed by the computer may be a program, the processes of which are performed in a chronological order along the description order in the specification, or may be a program, the processes of which are performed in parallel or at necessary timings when being called, for example.

Further, the embodiments of present technology are not limited to the above-mentioned embodiments and can be variously modified without departing from the essence of the present technology.

For example, the present technology can have the configuration of cloud computing in which one function is shared by a plurality of apparatuses via a network and processed in cooperation with each other.

Further, the steps described in the flowchart described above can be executed by one apparatus or by a plurality of apparatuses in a sharing manner.

Further, in the case where one step includes a plurality of processes, the plurality of processes in the one step can be performed by one apparatus or shared by a plurality of apparatus.

Further, the present technology can also take the following configurations.

(1) A driving assistant apparatus, including a control unit that perform, on a basis of the number of occupants in a peripheral vehicle, driving assistant processing for avoiding a collision between a host vehicle and the peripheral vehicle.
(2) The driving assistant apparatus according to (1), in which
   the peripheral vehicle is a vehicle that travels in front of or behind the host vehicle.
(3) The driving assistant apparatus according to (1) or (2), in which
   the control unit acquires peripheral vehicle information that is received by communication between the peripheral vehicle and the host vehicle and includes information indicating the number of occupants in the peripheral vehicle, and performs the driving assistant processing on a basis of the peripheral vehicle information.
(4) The driving assistant apparatus according to (3), in which
   the peripheral vehicle information includes information indicating a travelling state of the peripheral vehicle.
(5) The driving assistant apparatus according to any one of (1) to (4), in which
   the control unit performs, where the number of occupants in the peripheral vehicle in front of the host vehicle is larger than a predetermined number of people, processing of controlling a distance between vehicles as the driving assistant processing to widen a distance to the peripheral vehicle in front of the host vehicle.
(6) The driving assistant apparatus according to (3) or (4), in which
   the control unit acquires the peripheral vehicle information of the nearest peripheral vehicle in front of the host vehicle, and further acquires, where the number of occupants in the nearest peripheral vehicle is larger than a predetermined number of people, the peripheral vehicle information of the second nearest peripheral vehicle in front of the host vehicle.
(7) The driving assistant apparatus according to (6), in which
   the control unit performs, on a basis of the peripheral vehicle information of the nearest peripheral vehicle and the peripheral vehicle information of the second nearest peripheral vehicle, processing of controlling sudden braking of the host vehicle as the driving assistant processing.
(8) The driving assistant apparatus according to any one of (1) to (7), in which
   the control unit performs, where the number of occupants in the peripheral vehicle behind the host vehicle is larger than a predetermined number of people, processing of controlling a distance between vehicles to widen a distance to the peripheral vehicle behind the host vehicle, or processing of controlling lane change of the host vehicle as the driving assistant processing.
(9) The driving assistant apparatus according to (3) or (4), in which
   the control unit acquires, where the number of occupants in the peripheral vehicle behind the host vehicle is larger than a predetermined number of people, the peripheral vehicle information of the peripheral vehicle in front of the host vehicle, and performs the driving assistant processing on a basis of the peripheral vehicle information of the peripheral vehicle in front of the host vehicle.
(10) The driving assistant apparatus according to (9), in which
   the control unit performs, on a basis of the peripheral vehicle information of the peripheral vehicle in front of the host vehicle, processing of controlling sudden braking of the host vehicle or processing of controlling lane change of the host vehicle as the driving assistant processing.
(11) The driving assistant apparatus according to any one of (1) to (4), in which
   the control unit compares the number of occupants in the peripheral vehicle with the number of occupants in the host vehicle, and performs the driving assistant processing in accordance with the comparison result.
(12) The driving assistant apparatus according to any one of (1) to (11), in which
   the control unit controls output of a warning message corresponding to the number of occupants in the peripheral vehicle.
(13) A driving assistant method, including the step of
   performing, on a basis of the number of occupants in a peripheral vehicle, driving assistant processing for avoiding a collision between a host vehicle and the peripheral vehicle.
(14) A program causing a computer to execute processing including the step of
   performing, on a basis of the number of occupants in a peripheral vehicle, driving assistant processing for avoiding a collision between a host vehicle and the peripheral vehicle.
(15) A moving object, including
   a control unit that perform, on a basis of the number of occupants in a peripheral vehicle, driving assistant processing for avoiding a collision between a host vehicle and the peripheral vehicle.

### Reference Signs List

- 11: vehicle
- 25: communication unit
- 34: braking device
- 35: engine
- 37: driving motor
- 51: driving control ECU
- 141: host-vehicle-occupant-number acquisition unit
- 151: information acquisition unit
- 152: driving assistant processing unit
- 153: display control unit

## Claims

1. A driving assistant apparatus, comprising
a control unit that perform, on a basis of the number of occupants in a peripheral vehicle, driving assistant processing for avoiding a collision between a host vehicle and the peripheral vehicle.

2. The driving assistant apparatus according to claim 1, wherein
the peripheral vehicle is a vehicle that travels in front of or behind the host vehicle.

3. The driving assistant apparatus according to claim 1, wherein
the control unit acquires peripheral vehicle information that is received by communication between the peripheral vehicle and the host vehicle and includes information indicating the number of occupants in the peripheral vehicle, and performs the driving assistant processing on a basis of the peripheral vehicle information.

4. The driving assistant apparatus according to claim 3, wherein
the peripheral vehicle information includes information indicating a travelling state of the peripheral vehicle.

5. The driving assistant apparatus according to claim 1, wherein
the control unit performs, where the number of occupants in the peripheral vehicle in front of the host vehicle is larger than a predetermined number of people, processing of controlling a distance between vehicles as the driving assistant processing to widen a distance to the peripheral vehicle in front of the host vehicle.

6. The driving assistant apparatus according to claim 3, wherein
the control unit acquires the peripheral vehicle information of the nearest peripheral vehicle in front of the host vehicle, and further acquires, where the number of occupants in the nearest peripheral vehicle is larger than a predetermined number of people, the peripheral vehicle information of the second nearest peripheral vehicle in front of the host vehicle.

7. The driving assistant apparatus according to claim 6, wherein
the control unit performs, on a basis of the peripheral vehicle information of the nearest peripheral vehicle and the peripheral vehicle information of the second nearest peripheral vehicle, processing of controlling sudden braking of the host vehicle as the driving assistant processing.

8. The driving assistant apparatus according to claim 1, wherein
the control unit performs, where the number of occupants in the peripheral vehicle behind the host vehicle is larger than a predetermined number of people, processing of controlling a distance between vehicles to widen a distance to the peripheral vehicle behind the host vehicle, or processing of controlling lane change of the host vehicle as the driving assistant processing.

9. The driving assistant apparatus according to claim 3, wherein
the control unit acquires, where the number of occupants in the peripheral vehicle behind the host vehicle is larger than a predetermined number of people, the peripheral vehicle information of the peripheral vehicle in front of the host vehicle, and performs the driving assistant processing on a basis of the peripheral vehicle information of the peripheral vehicle in front of the host vehicle.

10. The driving assistant apparatus according to claim 9, wherein
the control unit performs, on a basis of the peripheral vehicle information of the peripheral vehicle in front of the host vehicle, processing of controlling sudden braking of the host vehicle or processing of controlling lane change of the host vehicle as the driving assistant processing.

11. The driving assistant apparatus according to claim 1, wherein
the control unit compares the number of occupants in the peripheral vehicle with the number of occupants in the host vehicle, and performs the driving assistant processing in accordance with the comparison result.

12. The driving assistant apparatus according to claim 1, wherein
the control unit controls output of a warning message corresponding to the number of occupants in the peripheral vehicle.

13. A driving assistant method, comprising the step of
performing, on a basis of the number of occupants in a peripheral vehicle, driving assistant processing for avoiding a collision between a host vehicle and the peripheral vehicle.

14. A program causing a computer to execute processing including the step of
performing, on a basis of the number of occupants in a peripheral vehicle, driving assistant processing for avoiding a collision between a host vehicle and the peripheral vehicle.

15. A moving object, comprising
a control unit that perform, on a basis of the number of occupants in a peripheral vehicle, driving assistant processing for avoiding a collision between a host vehicle and the peripheral vehicle.
